# EUROPEAN PATENT SPECIFICATION

(11) **EP 4 279 345 B1**
(45) Date of publication and mention of the grant of the patent: **09.07.2025**
(21) Application number: 22173508.7
(22) Date of filing: 16.05.2022
(51) Int. Cl.: B60T 8/17, B60T 8/32, B60T 13/66, B60T 17/22

(54) **A METHOD FOR BRAKING A RAILWAY VEHICLE, BRAKE SYSTEM OF A RAILWAY VEHICLE, RAILWAY VEHICLE COMPRISING THE BRAKE SYSTEM, AND TRAIN COMPRISING THE RAILWAY VEHICLE**
VERFAHREN ZUM BREMSEN EINES SCHIENENFAHRZEUGS, BREMSSYSTEM EINES SCHIENENFAHRZEUGS, SCHIENENFAHRZEUG MIT DEM BREMSSYSTEM UND ZUG MIT DEM SCHIENENFAHRZEUG
PROCÉDÉ DE FREINAGE D'UN VÉHICULE FERROVIAIRE, SYSTÈME DE FREINAGE D'UN VÉHICULE FERROVIAIRE, VÉHICULE FERROVIAIRE COMPRENANT LE SYSTÈME DE FREINAGE ET TRAIN COMPRENANT LE VÉHICULE FERROVIAIRE

(43) Date of publication of application: 22.11.2023
(73) Proprietor: KNORR-BREMSE Systeme für Schienenfahrzeuge GmbH, 80809 München (DE)
(72) Inventor: KREMER, Miklos, 1238 Budapest (HU); SZEKELY, Ferenc, 2381 Táborfalva (HU)

(56) References cited:
- EP-A1- 2 918 459
- DE-A1- 102011 113 069
- DE-A1- 102011 113 117

## Description

The invention relates to a method for braking a railway vehicle, a brake system of a railway vehicle, a railway vehicle comprising the brake system, and a train comprising the railway vehicles.

When initiating braking of a railway vehicle on a rail section with reduced adhesion, a delay occurs before the reduced adhesion can be detected. This delay is caused because when determining the adhesion between the wheel and the rail, only a quite small possible increase of a braking force is possible in order to avoid the occurrence of jerk. In particular, there are normative boundaries of action such that a brake rise time, or a ramp, or a jerk is limited, wherein the limitation depends on a vehicle level, such as a comfort level.

Due to this delay, the reduced adhesion on the rail section cannot be detected before wheel slide occurs during deceleration of the rail vehicle such that measures against a reduced braking performance can be taken only as a reaction to the wheel slide after being detected during the braking and, therefore, too late for enhancing the braking process.

Hence, the object underlying the invention is to remedy the above problem and to provide a method, a brake system, a railway vehicle, and a train which enable early measures against reduced braking performance.

The object is achieved by a method for braking a rail vehicle or a train, in which the adhesion between the vehicle wheel and the rail is detected at the start of the braking process.

Document DE 10 2011 113 117 A1 discloses a method for braking a railway vehicle comprising the following steps: detecting an adhesion level of preselected wheels of the railway vehicle by braking these preselected wheels with an increasing braking force until the adhesion level is detected and, braking further wheels with a braking force determined by taking into account the detected adhesion level, wherein a brake system of the railway vehicle comprises at least two brake devices configured to brake one of the wheel of the railway vehicle, respectively, and a brake controller configured to control the at least two brake devices, wherein the step of braking the further wheels is performed by initiating a braking procedure by the brake controller by braking the further wheels with a respective brake device (5).

The process makes it possible to achieve a braking force for detecting the adhesion value for the braked wheelsets within a short time at the start of the braking process without exceeding the legally specified buildup times of the braking force.

The object is achieved by a method according to claim 1, a brake system according to claim 7, and a railway vehicle according to claim 11, and a train according to claim 12. Advantageous further developments are included in the dependent claims.

According to an aspect of the invention, a method for braking a railway vehicle comprises the following steps: first, detecting an adhesion level of preselected wheels or wheelsets, a number of which being at least one but less than all wheels or wheelsets of a railway vehicle or a wagon or a train set, by braking these preselected wheel(s) or wheelset(s) with an increasing braking force until the adhesion is detected without exceeding a predefined build-up time of a total braking force, and second, braking all other wheels or wheelsets with a braking force determined by taking into account the detected adhesion level.

In this process, the strength of the braking force at the wheels or wheelsets is adjusted early in time so that the legally specified build-up time of the braking force for the entire assembly is maintained, however occurrence of jerks is avoided. The predefined build-up time is, in particular, a legally specified build-up time.

According to the invention, the brake system comprises at least two brake devices configured to brake one of the wheels or wheelsets of the railway vehicle, respectively, and a brake controller configured to control the at least two brake devices, wherein the step of detecting the adhesion level of preselected wheels or wheelsets is performed by initiating a first braking procedure by the brake controller at a first point in time by braking the preselected wheel(s) or wheelset(s) with a respective brake device; and detecting a present adhesion level between the braked wheel(s) or wheelset(s) and rail(s) during the first braking procedure by the brake controller; and the step of braking further wheels or wheelsets is performed by initiating a second braking procedure by the brake controller by braking the further wheels or wheelsets with a respective brake device.

The first braking procedure is to be seen as a kind of test braking procedure in order to detect the adhesion level early in time, so that the other wheel(s) or wheelset(s) can be braked by an optimized braking force.

In other words, due to the first braking procedure, by braking less than all of the wheels or wheelsets, an increase of the braking force for detecting the adhesion level can be determined quicker than in the case when all of the wheels or wheelsets are braked. The reason is that, when, e.g., only one wheel or wheelset is braked, compared to braking all of the wheels or wheelsets, a deceleration of the entire railway vehicle is only slight and it is easy not to exceed the legally specified build-up times of the total braking force, whereas the increase of the braking force of the initially braked reduced number of wheels or wheelsets can be determined quick such that the present adhesion between wheels of the initially braked wheelset and the rail section can be detected in an early stage of the braking process. When, subsequently, at least one further, particularly all remaining, wheels or wheelset(s) is/are braked, the early detected present adhesion level can be taken into account during braking of the railway vehicle in order to provide an improved braking performance.

According to an advantageous implementation of the method, one wheel or wheelset, in particular, the wheel or wheelset being the first in a driving direction, more particular, several wheelsets of the railway vehicle being the first in a driving direction, is/are braked in the first braking procedure.

In a further advantageous implementation of the method, the second braking procedure is initiated after a predetermined period after the first point in time.

According to a further advantageous implementation of the method, the brake controller comprises a wheel slide protection system, and the present adhesion level is detected by the wheel slide protection system.

In a further advantageous implementation of the method, the brake controller comprises an adhesion management system, and the adhesion management system is activated according to the detected present adhesion level.

Due to a further advantageous limitation of the method, the adhesion management system activates a sanding system.

According to the invention, an increase of braking force applied by the brake device in the first braking procedure is determined independent from an increase of the braking force applied by the brake device in the second braking procedure and it is determined to be quicker.

According to a further aspect of the invention, a brake system of a railway vehicle comprises at least two brake devices configured to brake a wheel or a wheelset of the railway vehicle, respectively, and a brake controller configured to control the at least two brake devices, and to, first, initiate a first braking procedure at a first point in time by braking at least one but less than all of wheels or wheelsets with a respective brake device; detect a present adhesion level between the braked wheel(s) or wheelset(s) and rail(s) during the first braking procedure; initiate a second braking procedure by braking further wheels or wheelsets with a respective brake device by taking into account the detected adhesion level.

In an advantageous implementation of the brake system, the brake controller comprises a wheel slide protection system configured to detect the present adhesion level.

According to the invention, the brake system comprises an adhesion management system configured to manage a wheel slide protection strategy.

Due to a further advantageous implementation of the brake system, the brake system comprises an electrodynamic brake device and/or an electromechanically actuated brake device.

According to a further aspect of the invention, a railway vehicle comprises at least two wheelsets and a brake system according to the invention.

According to yet a further aspect of the invention, a train comprises at least two railway vehicles according to the invention.

According to an embodiment, initially, only the wheelsets of the foremost vehicle of the train are braked. The reaction is then used to infer the current adhesion value. After the total braking force of these wheelsets has been built up, the remaining wheelsets are also braked. In the process, the strength of the braking force at the wheelsets is adjusted in time so that the legally specified buildup rate of the braking force for the overall adhesion is maintained.

Subsequently, the invention is elucidated by means of embodiments referring to the attached drawings.

In particular,
- Fig. 1: shows a train having a railway vehicle provided with a brake system according to the invention; and
- Fig. 2: shows a diagram illustrating a progression of braking forces depending on an elapsed time.

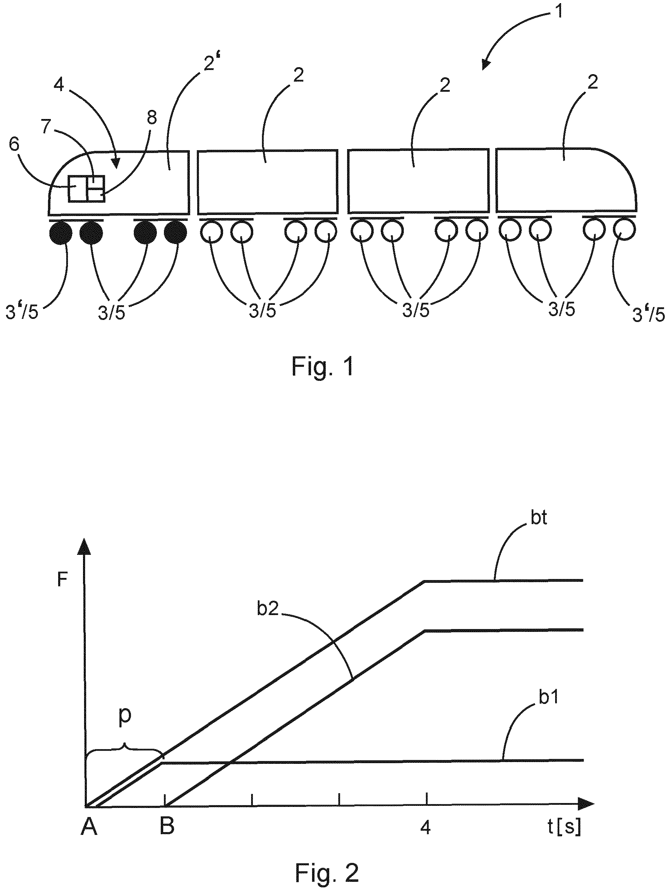

**Fig. 1** shows a train 1 having four railway vehicles 2, 2'. The railway vehicles 2 as well as the railway vehicle 2' respectively comprise four wheelsets 3 respectively comprising two wheels firmly fixed to an axle. In alternative embodiments, the railway vehicles 2, 2' are provided with another number of wheelsets 3, wherein at least two wheelsets 3 are provided, or the railway vehicles 2 are provided with individually suspended wheels. Further, the train 1 is alternatively provided with another number of railway vehicles 2, 2'. Furthermore, a wheelset 3' being the first in a respective driving direction is defined in the railway vehicle 2' at a first end of the train 1 and in the railway vehicle 2 located at an end of the train 1 opposite to the first end.

The railway vehicle 2' is provided with a brake system 4 according to the invention. The brake system 4 comprises brake devices 5 by which the wheelsets 3 or, alternatively, single wheels can be braked.

The brake system 4 of the railway vehicles 2, 2' comprises electromechanically actuated brake devices 5, wherein the railway vehicle 2' additionally comprises electrodynamic brake devices. In alternative embodiments, the railway vehicles 2, 2' are provided with other brake devices, such as hydraulically or pneumatically actuated brakes, and/or not all of the wheelsets 3 are provided with a brake device 5, wherein, nevertheless, at least two brake devices 5 are provided. In the alternative embodiment provided with individual wheel suspensions, the individual wheels are braked by a respectively assigned brake device 5.

The brake system 4 further comprises a brake controller 6 which is configured to control the brake devices 5 which means that the brake controller 6 controls a brake force of the individual brake devices 5. The brake controller 6 comprises a wheel slide protection system 7 and an adhesion management system 8. The functions of the wheel slide protection system 7 and of the adhesion management system 8 are integrated in the brake controller 6.

The wheel slide protection system 7 prevents an excessive sliding of the wheels of the railway vehicles 2, 2' on rails by adjusting either a brake force of the individual brake devices 5 of the wheelsets 3 or an acceleration force and, in particular, the wheel slide protection system 7 is configured to detect a present adhesion level between the wheels of the wheelsets 3 and the rails. The wheel slide protection system 7 recognizes a wheel slide of a specific wheel by comparing the rotational speed of the specific wheel and a respective rotational speed of other wheels or a velocity of the railway vehicle 2.

The adhesion management system 8 is configured to manage a wheel slide protection strategy. In particular, adhesion management devices of the adhsion management system 8 have two roles: one is to make sure that the available adhesion is utilized, e.g. by the wheel slide protection system 7, the otherone is to increase the available adhesion to the level determined by brake demand, e.g., by sanding or a magnetic track brake.

In particular, the railway vehicles 2, 2' are provided with a sanding system and the adhesion management system 8 activates the sanding system for applying sand on the rails for improving brake performance.

In alternative embodiments, the wheel slide protection system 7 and/or the adhesion management system 8 are separate units or they are omitted and the function of the detection of the present adhesion level to manage a wheel slide protection strategy is executed by other components of the brake controller 6.

**Fig. 2** shows a diagram illustrating a progression of braking forces F depending on an elapsed time t.

On the ordinate, the elapsed time t from a first point in time A when braking is initiated is plotted. On the abscissa, the different braking forces F are qualitatively plotted.

A graph denoted with b1 illustrates a progression of a braking force of a brake device 5 of a wheelset 3 braked in a first braking procedure, the braking of which is initiated at the first point in time A at 0 seconds. In alternative embodiments, in the first braking procedure, at least one but less than all of the wheelsets 3 are braked.

A graph denoted with b2 illustrates a progression of a braking force of a brake device 5 of further wheelsets 3 braked in a second braking procedure, the braking of which is initiated at a time B after a predefined period p after the first point in time A. In this embodiment, the predefined period p is 1 second.

A graph denoted with bt illustrates a progression of a total braking force of the brake devices 5 of all of the wheelsets 3 which is the sum of all of the individual braking forces.

At the first point in time A, in the first braking procedure, initiating of only the braking of preselected wheelsets 3, a number of which being at least one but less than all, in particular, of only one wheelset 3, is performed by the brake controller 6 up to the maximum braking force of the brake device 5 braking the preselected wheelset 3. Therefore, the increase of the braking force of the initially braked wheelset 3 can be quick since the further wheelsets 3 are not braked and, therefore, the deceleration of the train 1 is not excessive and no jerks occur. Nevertheless, by the quick increase of the braking force of the initially braked wheelset 3, the present adhesion level between the wheels of the initially braked wheelset 3 and the rails can be detected in an early stage of the braking.

After the predefined period p, in the second braking procedure, the braking of the further wheelsets 3 is initiated by the brake controller 6. The predefined period p is defined such that the normative requirements of the UIC, i.e., the International Union of Railways, and the Technical Specifications, i.e., TSI, are fulfilled such that the entire deceleration rise time of 3 - 5 seconds as the legally specified build-up time of the total braking force is kept. Therefore, the increase of the braking force of the brake device of the initially braked wheelset 3 is determined such that its maximum braking force is reached within the predefined period p as to be seen in the diagram of Fig. 2. As also to be seen in Fig. 2, the maximum entire braking force is reached after 4 seconds. Alternatively, in case that the present adhesion level can be detected before the maximum braking force is reached, the predefined period is terminated immediately after the present adhesion level is detected.

In operation, a method for controlling the brake system 4 is executed.

At the first point in time A, in the first braking procedure, the braking of the preselected wheelset 3 is initiated by the brake controller 6. In particular, the braking of one of the wheelsets 3, more particular, of the wheelset 3' being the first in the driving direction, is initiated. Alternatively, the braking of the wheelset 3' being the first in the driving direction is not initiated but the braking of another wheelset 3 is initiated or the breaking of several wheelsets 3 is initiated.

During braking in the first braking procedure, the present adhesion level between the wheels of the initially braked wheelset 3 and the rails is detected by the brake controller 6, in particular, by the wheel slide protection system 7. Alternatively, the present adhesion level is detected by another unit of the brake controller 6 as a separate unit.

At the time B after the predefined period p after the first point in time A, the braking of all of the further wheelsets 3, the braking of which has not initially been initiated, is initiated in the second braking procedure for decelerating the train 1 in order to at least fulfill the normative requirements. In this second braking procedure, the braking force is determined by taking into account the detected adhesion level. Alternatively, the braking of not all of the further wheelsets 3 is initiated but only of some of the further wheelsets 3, wherein the breaking of at least one further wheelset 3 is initiated.

An increase of the braking force of the brake device 5 of the initially braked wheelset 3 in the first braking procedure is independent from an increase of the braking force of the brake device 5 of the further wheelsets 3 in the second braking procedure. The increase of the braking force of the brake device 5 in the first braking procedure is quicker than the increase of the braking force of the brake devices 5 in the second braking procedure.

The adhesion management system 8 is activated according to the detected present adhesion level. That means that, if necessary due to a low present adhesion level, the adhesion management system 8, for example, activates the sanding system for increasing the adhesion level and/or tunes the wheel slide protection strategy. In particular, since different low adhesion situations, e.g., different contaminants, show different behaviours with the amount and duration of slip, different slip control strategies, such as an adaptive wheel slide protection, is advantageous for these different situations. However in the case of very low adhesion situations, due to the low available adhesion, slip control alone is not sufficient to maintain the demanded brake performance, therefore, additional adhesion management devices, such as the sanding system or a magnetic track brake, should be activated, which can improve the available adhesion.

If, on the other hand, the present adhesion level is sufficient, no specific measures by the adhesion management system 8 are necessary.

For executing the method according to the invention, the brake controller 6 is configured to initiate braking of the wheelset 3 at a first point in time A in the first braking procedure, detect the present adhesion level between the wheels of the wheelset 3 during braking in the first braking procedure, and, after the predefined period p after the first point in time A, initiate braking of the further wheel sets 3 taking into account the detected adhesion level in the second braking procedure.

While the invention has been illustrated and described in detail in the drawings and the foregoing description, such illustration and description are to be considered illustrative or exemplary and not restrictive. The invention defined in the claims is not limited to the disclosed embodiments. In the claims, the word "comprising" does not exclude other elements or steps, and the indefinite article "a" or "an" does not exclude a plurality.

### LIST OF REFERENCE SIGNS

- 1: train
- 2: railway vehicle
- 3: wheelset
- 4: brake system
- 5: brake device
- 6: brake controller
- 7: wheel slide protection system
- 8: adhesion managing system

## Claims

1. A method for braking a railway vehicle (2, 2'), wherein a brake system (4) of the railway vehicle (2, 2') comprises
at least two brake devices (5) configured to brake one of the wheels or wheelsets (3) of the railway vehicle (2, 2'), respectively, and
a brake controller (6) configured to control the at least two brake devices (5),
the method comprising the following steps:
first, detecting an adhesion level of preselected wheels or wheelsets (3) of the railway vehicle (2, 2') or of a train of several railway vehicles (2, 2'), a number of which being at least one but less than all wheels or wheelsets (3), by braking these preselected wheel(s) or wheelset(s) (3) with an increasing braking force, until the adhesion level is detected, without exceeding a predefined build-up time of a total braking force, and
second, braking further wheels or wheelsets (3), in particular all other wheels or wheelsets (3), with a braking force determined by taking into account the detected adhesion level,
wherein
the step of detecting the adhesion level of preselected wheels or wheelsets (3) is performed by
initiating a first braking procedure by the brake controller (6) at a first point in time (A) by braking the preselected wheel(s) or wheelset(s) (3) with a respective brake device (5); and
detecting a present adhesion level between the braked wheel(s) or wheelset(s) (3) and rail(s) during the first braking procedure by the brake controller (6); and
the step of braking further wheels or wheelsets (3) is performed by initiating a second braking procedure by the brake controller (6) by braking the further wheels or wheelsets (3) with a respective brake device (5),
wherein an increase of the braking force applied by the brake device (5) in the first braking procedure is determined independent from an increase of the braking force of the brake device (5) applied by the brake device (5) in the second braking procedure, and wherein the increase of the braking force in the first braking procedure is determined to be quicker than the increase of the braking force of the brake device (5) in the second braking procedure.

2. The method of claim 1, wherein
one wheel or wheelset (3) is braked at the first point in time (A).

3. The method of claim 1, wherein
the wheel or wheelset (3') being the first in a driving direction, in particular several wheels or wheelsets (3') of the train vehicle being the first in a driving direction, is/are braked in the first braking procedure.

4. The method of anyone of the preceding claims, wherein
the second braking procedure is initiated after a predetermined period (p) after the first point in time (A).

5. The method of anyone of the preceding claims, wherein
the brake controller (6) comprises a wheel slide protection system (7), and
the present adhesion level is detected by the wheel slide protection system (7).

6. The method of anyone of the claims 1 to 3, wherein
the brake controller (6) comprises an adhesion management system (8) activating a sanding system for applying sand on the rails for improving brake performance, and
the adhesion management system (8) is activated according to the detected present adhesion level.

7. A brake system (4) of a railway vehicle (2, 2') comprising
at least two brake devices (5) configured to brake a wheel or a wheelset (3) of the railway vehicle (2, 2'), respectively, and
a brake controller (6) configured to control the at least two brake devices (5), wherein
the brake controller (6) is configured to,
first, detect an adhesion level of preselected wheels or wheelsets (3) of the railway vehicle (2, 2') or of a train of several railway vehicles (2, 2'), a number of which being at least one but less than all wheels or wheelsets (3), by braking these preselected wheel(s) or wheelset(s) (3) with an increasing braking force, until the adhesion level is detected, without exceeding a predefined build-up time of a total braking force,
initiate a first braking procedure at a first point in time (A) by braking at least one but less than all of wheels or wheelsets (3) with a respective brake device (5);
detect a present adhesion level between the braked wheel(s) or wheelset(s) (3) and rail(s) during the first braking procedure; and
initiate a second braking procedure by braking further wheels or wheelsets (3) with a respective brake device (5) by taking into account the detected adhesion level,
wherein an increase of the braking force applied by the brake device (5) in the first braking procedure is determined independent from an increase of the braking force of the brake device (5) applied by the brake device (5) in the second braking procedure, and wherein the increase of the braking force in the first braking procedure is determined to be quicker than the increase of the braking force of the brake device (5) in the second braking procedure.

8. The brake system (4) of claim 7, wherein
the brake controller (6) comprises a wheel slide protection system (7) configured to detect the present adhesion level.

9. The brake system (4) of claim 7 or 8, wherein
the brake system (4) comprises an adhesion management system (8) activating a sanding system for applying sand on the rails for improving brake performance configured to manage a wheel slide protection strategy.

10. The brake system (4) of anyone of claims 7 to 9, wherein
the brake system (4) comprises an electrodynamic brake and/or an electromechanically actuated brake.

11. A railway vehicle (2) comprising at least two wheelsets (3) and a brake system (4) according to anyone of the claims 7 to 10.

12. A train (1) comprising at least two railway vehicles (2) according to claim 11.

## Patentansprüche

1. Verfahren zum Bremsen eines Schienenfahrzeugs (2, 2'), wobei ein Bremssystem (4) des Schienenfahrzeugs (2, 2') umfasst
mindestens zwei Bremsvorrichtungen (5) die so konfiguriert sind, dass sie jeweils eines der Räder oder Radsätze (3) des Schienenfahrzeugs (2, 2') abbremsen, und
eine Bremssteuereinheit (6), die so konfiguriert ist, dass sie die mindestens zwei Bremsvorrichtungen (5) steuert,
wobei das Verfahren die folgenden Schritte umfasst:
erstens das Erfassen eines Kraftschlussgrads von vorgewählten Rädern oder Radsätzen (3) des Schienenfahrzeugs (2, 2') oder eines Zuges aus mehreren Schienenfahrzeugen (2, 2'), von denen eine Anzahl mindestens eines, aber weniger als alle Räder oder Radsätze (3) beträgt, durch Abbremsen dieses/dieser vorgewählten Rades (Räder) oder Radsatzes (Radsätze) (3) mit zunehmender Bremskraft, bis der Kraftschlussgrad erfasst wird, ohne eine vorgegebene Aufbauzeit einer Gesamtbremskraft zu überschreiten, und
zweitens das Abbremsen weiterer Räder oder Radsätze (3), insbesondere aller anderen Räder oder Radsätze (3), mit einer Bremskraft, die unter Berücksichtigung des erfassten Kraftschlussgrads bestimmt wird,
wobei
der Schritt des Erfassens des Kraftschlussgrads von vorgewählten Rädern oder Radsätzen (3) durchgeführt wird durch
Einleiten eines ersten Bremsvorgangs durch die Bremssteuereinheit (6) zu einem ersten Zeitpunkt (A) durch Abbremsen des/der vorgewählten Rades (Räder) oder Radsatzes (Radsätze) (3) mit einer jeweiligen Bremsvorrichtung (5); und
Erfassen eines vorhandenen Kraftschlussgrads zwischen dem/den abgebremsten Rad (Rädern) oder Radsatz (Radsätzen) (3) und der/den Schiene(n) während des ersten Bremsvorgangs durch die Bremssteuereinheit (6); und
wobei der Schritt des Abbremsens weiterer Räder oder Radsätze (3) durch Einleiten eines zweiten Bremsvorgangs durch die Bremssteuereinheit (6) durch Abbremsen der weiteren Räder oder Radsätze (3) mit einer jeweiligen Bremsvorrichtung (5) durchgeführt wird,
wobei eine Zunahme der von der Bremsvorrichtung (5) im ersten Bremsvorgang aufgebrachten Bremskraft unabhängig von einer Zunahme der von der Bremsvorrichtung (5) im zweiten Bremsvorgang aufgebrachten Bremskraft der Bremsvorrichtung (5) bestimmt wird, und wobei die Zunahme der Bremskraft im ersten Bremsvorgang als schneller bestimmt wird als die Zunahme der Bremskraft der Bremsvorrichtung (5) im zweiten Bremsvorgang.

2. Verfahren nach Anspruch 1, wobei
ein Rad oder Radsatz (3) zum ersten Zeitpunkt (A) abgebremst wird.

3. Verfahren nach Anspruch 1, wobei
das/der in eine Fahrtrichtung erste Rad oder erste Radsatz (3'), insbesondere mehrere in eine Fahrtrichtung erste Räder oder Radsätze (3') des Schienenfahrzeugs, im ersten Bremsvorgang abgebremst wird/werden.

4. Verfahren nach einem der vorstehenden Ansprüche, wobei
der zweite Bremsvorgang nach einer vorgegebenen Zeitspanne (p) nach dem ersten Zeitpunkt (A) eingeleitet wird.

5. Verfahren nach einem der vorstehenden Ansprüche, wobei die Bremssteuereinheit (6) ein Gleitschutzsystem (7) umfasst, und
der vorhandene Kraftschlussgrad durch das Gleitschutzsystem (7) erfasst wird.

6. Verfahren nach einem der Ansprüche 1 bis 3, wobei
die Bremssteuereinheit (6) ein Kraftschlussmanagementsystem (8) umfasst, das ein Sandungssystem zum Aufbringen von Sand auf die Schienen zur Verbesserung der Bremsleistung aktiviert, und
das Kraftschlussmanagementsystem (8) entsprechend dem erfassten vorhandenen Kraftschlussgrad aktiviert wird.

7. Bremssystem (4) eines Schienenfahrzeugs (2, 2') umfassend
mindestens zwei Bremsvorrichtungen (5), die so konfiguriert sind, dass sie jeweils ein Rad oder einen Radsatz (3) des Schienenfahrzeugs (2, 2') abbremsen, und
eine Bremssteuereinheit (6), die so konfiguriert ist, dass sie die mindestens zwei Bremsvorrichtungen (5) steuert, wobei
die Bremssteuereinheit (6) konfiguriert ist zum
erstens, Erfassen eines Kraftschlussgrads von vorgewählten Rädern oder Radsätzen (3) des Schienenfahrzeugs (2, 2') oder eines Zuges aus mehreren Schienenfahrzeugen (2, 2'), von denen eine Anzahl mindestens eines, aber weniger als alle Räder oder Radsätze (3) beträgt, durch Abbremsen dieses/dieser vorgewählten Rades (Räder) oder Radsatzes (Radsätze) (3) mit zunehmender Bremskraft, bis der Kraftschlussgrad erfasst wird, ohne eine vorgegebene Aufbauzeit einer Gesamtbremskraft zu überschreiten,
Einleiten eines ersten Bremsvorgangs zu einem ersten Zeitpunkt (A) durch Abbremsen mindestens eines, aber weniger als aller Räder oder Radsätze (3) mit einer entsprechenden Bremsvorrichtung (5);
Erfassen eines vorhandenen Kraftschlussgrads zwischen dem/den abgebremsten Rad (Rädern) oder Radsatz (Radsätzen) (3) und der/den Schiene(n) während des ersten Bremsvorgangs; und
Einleiten eines zweiten Bremsvorgangs durch Abbremsen weiterer Räder oder Radsätze (3) mit einer jeweiligen Bremsvorrichtung (5) unter Berücksichtigung des erfassten Kraftschlussgrads,
wobei eine Zunahme der von der Bremsvorrichtung (5) im ersten Bremsvorgang aufgebrachten Bremskraft unabhängig von einer Zunahme der von der Bremsvorrichtung (5) im zweiten Bremsvorgang aufgebrachten Bremskraft der Bremsvorrichtung (5) bestimmt wird, und wobei die Zunahme der Bremskraft im ersten Bremsvorgang als schneller bestimmt wird als die Zunahme der Bremskraft der Bremsvorrichtung (5) im zweiten Bremsvorgang.

8. Bremssystem (4) nach Anspruch 7, wobei
die Bremssteuereinheit (6) ein Gleitschutzsystem (7) umfasst, das so konfiguriert ist, dass es den vorhandenen Kraftschlussgrad erfasst.

9. Bremssystem (4) nach Anspruch 7 oder 8, wobei
das Bremssystem (4) ein Kraftschlussmanagementsystem (8) umfasst, das ein Sandungssystem zum Aufbringen von Sand auf die Schienen zur Verbesserung der Bremsleistung aktiviert, das so konfiguriert ist, dass es eine Gleitschutzstrategie verwaltet.

10. Bremssystem (4) nach einem der Ansprüche 7 bis 9, wobei
das Bremssystem (4) eine elektrodynamische Bremse und/oder eine elektromechanisch betätigte Bremse umfasst.

11. Schienenfahrzeug (2), umfassend mindestens zwei Radsätzen (3) und ein Bremssystem (4) nach einem der Ansprüche 7 bis 10.

12. Zug (1), umfassend mindestens zwei Schienenfahrzeuge (2) nach Anspruch 11.

## Revendications

1. Procédé de freinage d'un véhicule ferroviaire (2, 2'), dans lequel un système de freinage (4) du véhicule ferroviaire (2, 2') comprend
au moins deux dispositifs de freinage (5) configurés pour freiner l'une des roues ou l'un des essieux montés (3) du véhicule ferroviaire (2, 2'), respectivement, et
un dispositif de commande de freinage (6) configuré pour commander les au moins deux dispositifs de freinage (5),
le procédé comprenant les étapes suivantes :
premièrement, la détection d'un niveau d'adhérence de roues ou d'essieux montés (3) présélectionné(e)s du véhicule ferroviaire (2, 2') ou d'un train de plusieurs véhicules ferroviaires (2, 2'), dont le nombre est d'au moins un, mais inférieur à la totalité des roues ou essieux montés (3), en freinant cette ou ces roues ou ce ou ces essieux montés (3) présélectionné(e)s avec une force de freinage croissante, jusqu'à ce que le niveau d'adhérence soit détecté, sans dépasser un temps d'accumulation prédéfini d'une force de freinage totale, et
deuxièmement, le freinage des roues ou essieux montés (3) supplémentaires, en particulier toutes les autres roues ou tous les autres essieux montés (3), avec une force de freinage déterminée en tenant compte du niveau d'adhérence détecté,
dans lequel
l'étape de détection du niveau d'adhérence de roues ou essieux montés (3) présélectionné(e)s est réalisée par
le lancement d'une première opération de freinage par le dispositif de commande de freinage (6) à un premier instant (A) en freinant la ou les roues ou le ou les essieux montés présélectionné(e)s (3) avec un dispositif de freinage respectif (5) ; et
la détection d'un niveau d'adhérence actuel entre la ou les roues ou le ou les essieux montés (3) freiné(e)s et un ou des rails pendant la première opération de freinage par le dispositif de commande de freinage (6) ; et
l'étape de freinage de roues ou essieux montés supplémentaires (3) est réalisée en lançant une seconde opération de freinage par le dispositif de commande de freinage (6) en freinant les roues ou essieux montés supplémentaires (3) avec un dispositif de freinage respectif (5),
dans lequel une augmentation de la force de freinage appliquée par le dispositif de freinage (5) dans la première opération de freinage est déterminée indépendamment d'une augmentation de la force de freinage du dispositif de freinage (5) appliquée par le dispositif de freinage (5) dans la seconde opération de freinage, et dans lequel l'augmentation de la force de freinage dans la première opération de freinage est déterminée comme étant plus rapide que l'augmentation de la force de freinage du dispositif de freinage (5) dans la seconde opération de freinage.

2. Procédé selon la revendication 1, dans lequel
une roue ou un essieu monté (3) est freiné(e) au premier instant (A).

3. Procédé selon la revendication 1, dans lequel
la roue ou l'essieu monté (3') étant le premier dans un sens de marche, en particulier plusieurs roues ou plusieurs essieux montés (3') du véhicule ferroviaire étant les premiers dans un sens de marche, est/sont freinés lors de la première opération de freinage.

4. Procédé selon l'une quelconque des revendications précédentes, dans lequel
la seconde opération de freinage est lancée après une période prédéterminée (p) après le premier instant (A).

5. Procédé selon l'une quelconque des revendications précédentes, dans lequel
le dispositif de commande de freinage (6) comprend un système d'antipatinage (7), et
le niveau d'adhérence actuel est détecté par le système d'antipatinage (7).

6. Procédé selon l'une quelconque des revendications 1 à 3, dans lequel
le dispositif de commande de freinage (6) comprend un système de gestion d'adhérence (8) activant un système de sablage pour appliquer du sable sur les rails afin d'améliorer la performance de freinage, et
le système de gestion d'adhérence (8) est activé en fonction du niveau d'adhérence actuel détecté.

7. Système de freinage (4) d'un véhicule ferroviaire (2, 2') comprenant
au moins deux dispositifs de freinage (5) configurés pour freiner respectivement une roue ou un essieu monté (3) du véhicule ferroviaire (2, 2'), et
un dispositif de commande de freinage (6) configuré pour commander les au moins deux dispositifs de freinage (5), dans lequel
le dispositif de commande de freinage (6) est configuré pour,
détecter d'abord un niveau d'adhérence de roues ou d'essieux montés (3) présélectionné(e)s du véhicule ferroviaire (2, 2') ou d'un train de plusieurs véhicules ferroviaires (2, 2'), dont le nombre est
d'au moins un, mais inférieur à la totalité des roues ou essieux montés (3), en freinant ce ou ces roues ou ce ou ces essieux montés (3) présélectionné(e)s avec une force de freinage croissante, jusqu'à ce que le niveau d'adhérence soit détecté, sans dépasser un temps d'accumulation prédéfini d'une force de freinage totale,
lancer une première opération de freinage à un premier instant (A) en freinant au moins un ou une mais moins de la totalité des roues ou essieux montés (3) avec un dispositif de freinage respectif (5) ;
détecter un niveau d'adhérence actuel entre la ou les roues ou le ou les essieux montés (3) freiné(e)s et un ou des rails pendant la première opération de freinage ; et
lancer une seconde opération de freinage en freinant des roues ou essieux montés supplémentaires (3) avec un dispositif de freinage respectif (5) en tenant compte du niveau d'adhérence détecté,
dans lequel une augmentation de la force de freinage appliquée par le dispositif de freinage (5) dans la première opération de freinage est déterminée indépendamment d'une augmentation de la force de freinage du dispositif de freinage (5) appliquée par le dispositif de freinage (5) dans la seconde opération de freinage, et dans lequel l'augmentation de la force de freinage dans la première opération de freinage est déterminée comme étant plus rapide que l'augmentation de la force de freinage du dispositif de freinage (5) dans la seconde opération de freinage.

8. Système de freinage (4) selon la revendication 7, dans lequel
le dispositif de commande de freinage (6) comprend un système d'antipatinage (7) configuré pour détecter le niveau d'adhérence actuel.

9. Système de freinage (4) selon la revendication 7 ou 8, dans lequel
le système de freinage (4) comprend un système de gestion d'adhérence (8) activant un système de sablage pour appliquer du sable sur les rails afin d'améliorer la performance de freinage, configuré pour gérer une stratégie d'antipatinage.

10. Système de freinage (4) selon l'une quelconque des revendications 7 à 9, dans lequel
le système de freinage (4) comprend un frein électrodynamique et/ou un frein à commande électromécanique.

11. Véhicule ferroviaire (2) comprenant au moins deux essieux montés (3) et un système de freinage (4) selon l'une quelconque des revendications 7 à 10.

12. Train (1) comprenant au moins deux véhicules ferroviaires (2) selon la revendication 11.
